# EUROPÄISCHE PATENTSCHRIFT

(11) **EP 2 867 312 B1**
(45) Veröffentlichungstag und Bekanntmachung des Hinweises auf die Patenterteilung: **20.02.2019**
(21) Anmeldenummer: 13732190.7
(22) Anmeldetag: 28.06.2013
(51) Int. Cl.: C09C 1/48, C09C 1/50, C09C 1/60, B01J 19/24, B01J 12/00, C10B 5/00, C10B 7/10, C10B 53/07, C10B 57/02, B01J 2/00

(54) **VERFAHREN UND VORRICHTUNG ZUR HERSTELLUNG VON HYBRID-CARBON BLACK-TEILCHEN**
PROCESS AND APPARATUS FOR PRODUCING HYBRID CARBON BLACK PARTICLES
PROCÉDÉ ET DISPOSITIF DESTINÉS À PRÉPARER DES PARTICULES HYBRIDES DE NOIR DE CARBONE

(30) Priorität: 29.06.2012 DE 102012105796
(43) Veröffentlichungstag der Anmeldung: 06.05.2015
(73) Patentinhaber: Pyrolyx AG, 80335 München (DE)
(72) Erfinder: RAEDER, Niels, 82327 Tutzing (DE); MERZ, Holger, 65779 Kelkheim (DE); DÜLGER, Fikret, A-1020 Wien (AT)
(74) Vertreter: Flügel Preissner Schober Seidel
(86) Internationale Anmeldenummer: PCT/EP2013/063704
(87) Internationale Veröffentlichungsnummer: WO 2014/001539

(56) Entgegenhaltungen:
- DE-A1- 19 623 198
- US-A- 2 695 837
- US-A1- 2004 213 728

## Beschreibung

### Technischer Hintergrund

Die Erfindung betrifft ein Verfahren und eine Vorrichtung zur Herstellung von Carbon Black - Teilchen.

Ein bekanntes Verfahren zur Herstellung von Carbon Black oder Industrie-Ruß ist der so genannte Furnace Prozess, bei dem in einer Verbrennungskammer, unter kontrollierter Luftzufuhr erst ein Heißgas erzeugt wird, in dem dann ein Kohlenstoff - Basismaterial, meist aromatische carbo- oder petrochemische Öle bei hohen Temperaturen verbrannt werden, um so freien Kohlenstoff, d.h. Carbon Black zu erzeugen. Diese Reaktion wird im letzten Schritt des Furnace Prozesses, dem Quenching, mittels Wasserzugabe abrupt an der Stelle abgebrochen, an dem die entstehenden Carbon Black - Teilchen die gewünschte Größenordnung und Eigenschaften besitzen.

Die derart hergestellten Carbon Black - Teilchen haben eine Größenordnung und -struktur im Nanobereich und sind aufgrund ihrer geringen Dichte stark staubend und nur schwer transportierbar, weswegen sich direkt an das Quenching eine Verdichtungsanlage anschließt, in der die Carbon Black - Teilchen direkt pelletiert werden. Dabei wird sich die Eigenschaft des zu Beginn eingesetzten Gas - Luft - Stromes zu Nutze gemacht, da über diesen Gas - Luft - Strom ein Teilchenstrom aus Carbon Black - Teilchen entsteht, der direkt in die Pelletierungsanlage eingeblasen werden kann ohne dass die Carbon Black - Teilchen transportiert werden müssen. In Form von den in der Pelletierungsanalge erzeugten Pellets ist das hergestellte Carbon Black dann problemlos transportierbar.

Durch neuere Entwicklungen in der Carbon Black - Herstellung durch Pyrolyse aus Altreifen, beispielsweise beschrieben in WO 2011/035812 A1, kann relativ reines Carbon Black auch in einem Recyclingprozess gewonnen werden. Dieses Recycling Carbon Black ist kostengünstiger als das im oben beschriebenen Furnace Prozess hergestellte Standard Carbon Black. Daher ist es wünschenswert, Recycling Carbon Black zu Standard Carbon Black zuzumischen, um so kostengünstigere Ausgangsstoffe, beispielsweise für die Reifenindustrie, bereitstellen zu können.

Aufgrund der Prozessführung in der Pyrolyse weist Recycling Carbon Black unterschiedliche Korngrößen auf. Daher wird es, um eine definierte maximale Teilchengröße zu erhalten, gemahlen. Wie Standard Carbon Black hat das gemahlene Recycling Carbon Black eine sehr geringe Dichte und damit ein sehr großes Volumen, so dass es schlecht gelagert, gefördert oder transportiert werden kann. Aus diesem Grund kann auch Recycling Carbon Black pelletiert werden, damit es besser lager -, förder - und transportfähig ist.

Eine einfache Vermischung verschiedener Carbon Black - Pellets vor einem Transport führt zu einem unerwünschten Aufplatzen der Pellets durch während der Vermischung wirkende Scherkräfte. Somit werden die Carbon Black - Spezies wieder in ihre ursprüngliche unerwünschte Form mit geringer Dichte und großem Volumen überführt, was wiederum ungünstig ist für die Lagerung, Förderung oder den Transport.

US 2,695,837 beschreibt Verfahren zur Herstellung von Carbon Black. Dabei werden Carbon Black Basisteilchen bereitgestellt und dann in einer Trommel pelletiert. US 2004/0213728 A1 beschreibt ebenfalls ein Verfahren zur Herstellung von Carbon Black. Es werden erste Carbon-Black-Teilchen bereitgestellt, wobei zum Ausgangsmaterial beaded carbon black beigemischt wird.

Aufgabe der Erfindung ist es daher, ein Verfahren und eine Vorrichtung vorzuschlagen, die ein Vermischen unterschiedlicher Carbon Black - Spezies ohne die oben genannten Nachteile ermöglichen.

Diese Aufgabe wird mit einem Verfahren zur Herstellung von Hybrid - Carbon Black - Teilchen gemäß dem Anspruch 1 gelöst.

Eine Vorrichtung zur Herstellung von Hybrid - Carbon Black - Teilchen sowie ein mit dem Verfahren hergestelltes Hybrid - Carbon Black - Teilchen ist Gegenstand der Nebenansprüche.

Vorteilhafte Ausgestaltungen der Erfindung sind Gegenstand der Unteransprüche.

### Darstellung der Erfindung

Ein Verfahren zur Herstellung von Hybrid-Carbon Black-Teilchen weist die folgenden Schritte auf:
a) Bereitstellung von ersten Carbon Black Basisteilchen;
b) Bereitstellung von zweiten Carbon Black Basisteilchen;
c) Mahlen der zweiten Carbon Black Basisteilchen;
d) Einmischen der zweiten Carbon Black Basisteilchen in einen Teilchenstrom der ersten Carbon Black Basisteilchen; und
d) Pelletierung der ersten und zweiten Carbon Black Basisteilchen zu Hybrid- Carbon Black-Teilchen.

Zunächst werden demgemäß unterschiedliche Carbon Black - Spezies hergestellt und diese direkt miteinander vermischt. Dabei werden die zweiten Carbon Black Basisteilchen während des Einmischens in den Teilchenstrom der ersten Carbon Black Basisteilchen auf die gewünschte Korngröße gemahlen. Anschließend werden die beiden Carbon Black Basisteilchen miteinander vermischt. Durch eine gemeinsame Pelletierung der zusammen in einem Teilchenstrom vorliegenden ersten und zweiten Carbon Black Basisteilchen entstehen Pellets, die sowohl die ersten Carbon Black Basisteilchen als auch die zweiten Carbon Black Basisteilchen aufweisen, so dass demgemäß gut lager -, förder - und transportierbare Hybrid - Carbon Black - Teilchen hergestellt worden sind.

Je nach gewünschtem Mischungsverhältnis können vorzugsweise zwischen 0 Gew.-% der zweiten Carbon Black Basisteilchen und 99 Gew.-% der zweiten Carbon Black Basisteilchen in den Teilchenstrom der ersten Carbon Black Basisteilchen eingemischt werden.

Vorzugsweise werden in Schritt a) die folgenden Schritte durchgeführt:
a1) Verbrennung eines Kohlenstoffbasismaterials in einem Verbrennungsofen, vorzugsweise in einer Strömung eines Gas-Luft-Gemischs bei Verbrennungstemperaturen zwischen 1200 °C und 1800 °C;
a2) schnelles Abkühlen einer in Schritt a1) entstehenden Verbrennungsprodukt-Strömung, sodass sich die ersten Carbon Black Basisteilchen bilden.

Die ersten Carbon Black Basisteilchen werden vorteilhaft über einen Furnace Prozess hergestellt, wobei vorzugsweise durch den verwendeten Gas - Luft - Verbrennungsstrom ein Teilchenstrom der entstehenden erste Carbon Black Basisteilchen gebildet wird, der diesen Teilchenstrom direkt in eine Pelletierungsanlage einbläst. Vor der Pelletierung wird das durch die Verbrennung entstehende Carbon Black bevorzugt gequencht, d.h. sehr schnell abgekühlt, so dass durch das sehr schnelle Abkühlen vorteilhaft Teilchen einer bestimmten Teilchengröße im Mikrometerbereich und mit bestimmten Eigenschaften ausfallen.

Vorteilhaft wird ein vorbestimmtes Mischungsverhältnis des Gas-Luft-Gemischs sowie die Verbrennungstemperatur zur Erzielung vorbestimmter Qualitäten der ersten Carbon Black Basisteilchen, insbesondere einer Teilchengröße von etwa 2 µm bis 10 µm, vorzugsweise 3 µm bis 7 µm, eingestellt.

Je nach Verbrennungstemperatur entstehen unterschiedliche Carbon Black Qualitäten, da über die Verbrennungstemperatur die Geschwindigkeit der Verbrennung vorzugsweise gesteuert werden kann und so vorteilhaft durch die Verbrennungsgeschwindigkeit der Anteil an verunreinigenden Rückständen in dem entstehenden Carbon Black gesteuert werden kann. Beispielsweise hängt die chemische Natur der Carbon Black Basisteilchen auch davon ab, wie groß der Anteil an Gas in dem Gas - Luft - Strom ist.

Vorzugsweise erfolgt das schnelle Abkühlen durch Eindüsen von Wasser in die Verbrennungsprodukt-Strömung.

Bevorzugt wird als Kohlenstoffbasismaterial aromatisches, meist carbo- oder petrochemisches, Öl, verbrannt.

In bevorzugter Ausgestaltung wird in Schritt b) ein Produktgranulat auf der Grundlage von Kohlenstoff in mehreren Heizzonen mit unterschiedlichen Temperaturen in einer Unterdruckatmosphäre zu einem Pyrolyseprodukt pyrolysiert, wobei das Produktgranulat in jeder Heizzone 2 bis 4 Stunden verweilt.

Besonders bevorzugt wird das Produktgranulat in 3 Heizzonen geheizt, wobei in einer ersten Heizzone vorzugsweise eine Temperatur von 100 °C bis 200 °C vorherrscht, in einer zweiten Heizzone vorzugsweise eine Temperatur von 200 °C bis 350 °C, und in einer dritten Heizzone vorzugsweise eine Temperatur von 300 °C bis 600 °C. Dadurch sowie die lange Verweildauer in den einzelnen Heizzonen wird das Produktgranulat vorzugsweise langsam pyrolysiert, so dass flüchtige Rückstände vorteilhaft nahezu vollständig aus dem Produktgranulat entfernt werden. So entsteht vorzugsweise ein möglichst reines Recycling Carbon Black.

Bevorzugt werden als Produktgranulat zerkleinerte Reifenabfälle verwendet. So kann vorteilhaft ein Kreislauf erzeugt werden, bei dem Reifen, die unter Verwendung von Carbon Black - Teilchen hergestellt worden sind, wieder zu beispielsweise in der Reifenindustrie verwendbaren Carbon Black recycelt werden.

Um insbesondere eine Wiederverwendung des Recycling Carbon Black in der Reifenindustrie zu ermöglichen, wird das das Pyrolyseprodukt vorzugsweise bei etwa 800 °C nachverfeinert.

Bevorzugt werden die zweiten Carbon Black Basisteilchen zu einer Teilchengröße von maximal etwa 5 µm gemahlen.

Dies entspricht vorteilhaft etwa der Teilchengröße der ersten Carbon Black Basisteilchen, die in dem Vermächtnis Ofen erzeugt werden, so dass vorzugsweise eine besonders homogene Vermischung der beiden Carbon Black Spezies erzielt werden kann.

Vorteilhaft wird in Schritt d) der Teilchenstrom aus den ersten und zweiten Carbon Black Basisteilchen zum Pelletieren der Carbon Black Basisteilchen zu Hybrid-Carbon Black-Teilchen mit Wasser und/oder mit weiteren Zusatzstoffen vermischt.

Durch das Wasser und eventuell weitere Zusatzstoffe kleben die erstem und zweitem Carbon Black Basisteilchen vorteilhaft aneinander fest und verdichten so bevorzugt zu dem Hybrid - Carbon Black - Teilchen in Pelletform.

Es ist bevorzugt, dass der Teilchenstrom in Schritt d) auf wenigstens 1/2 seines ursprünglichen Volumens verdichtet wird.

Je mehr das Volumen der ersten und zweiten Carbon Black Basisteilchen vorzugsweise verringert wird, desto besser eignen sich die hergestellten Pellets beispielsweise zur Lagerung, Förderung und zum Transport.

Vorteilhaft werden die Hybrid-Carbon Black-Teilchen nach Schritt d) getrocknet.

Durch die Trocknung wird vorteilhaft das beim Quenching und Pelletieren zugefügte Wasser entfernt.

Ein vorteilhaftes Hybrid - Carbon Black - Teilchen aus ersten Carbon Black Basisteilchen und zweiten Carbon Black Basisteilchen ist mit dem oben beschriebenen Verfahren hergestellt.

Eine Vorrichtung zur Herstellung von Hybrid- Carbon Black-Teilchen weist eine Herstelleinrichtung zum Erzeugen eines Teilchenstroms aus ersten Carbon Black Basisteilchen, eine Zuführeinrichtung zum Zuführen von zweiten Carbon Black Basisteilchen zu dem Teilchenstrom und eine Verdichtungseinrichtung zum Pelletieren der ersten und zweiten Carbon Black Basisteilchen zu Hybrid-Carbon Black-Teilchen auf, wobei die Zuführeinrichtung eine Mahleinrichtung zum Erzeugen der zweiten Carbon Black Basisteilchen durch Zermahlen eines Pyrolyseprodukts auf Grundlage von Kohlenstoff aufweist.

Die Mahleinrichtung ist in der Zufuhreinrichtung zum Zermahlen des Pyrolyseprodukts, nämlich des Recycling Carbon Black, angeordnet, so dass das Recycling Carbon Black vorteilhaft direkt beim Zuführen in den Teilchenstrom der ersten Carbon Black Basisteilchen zermahlen wird. Die zermahlenen zweiten Carbon Black Basisteilchen werden dann vorteilhaft durch den in der Furnace Brennkammer erzeugten Teilchenstrom der ersten Carbon Black Basisteilchen mitgerissen, wodurch die Problematik des großen Volumens bzw. der geringen Dichte beider Carbon Black Basisteilchen überwunden wird.

Vorteilhaft ist eine Trocknungseinrichtung zum Trocknen der Hybrid- Carbon Black - Teilchen vorgesehen, um so Wasser, das in der Prozessführung zugeführt worden ist, vorzugsweise aus den Pellets zu entfernen, um diese vorteilhaft in weiteren Verfahrensschritten beispielsweise in der Reifenherstellung ohne weitere Aufbereitung verwenden zu können.

Vorteilhafte Ausgestaltungen der Erfindung werden nachfolgend anhand der beigefügten Zeichnungen näher erläutert.

### Kurzbeschreibung der Zeichnungen

Fig. 1 zeigt eine Vorrichtung zur Herstellung von Hybrid - Carbon Black - Teilchen;
Fig. 2 zeigt eine Vorrichtung zur Herstellung von Recycling Carbon Black; und
Fig. 3 zeigt die Verbindung von ersten und zweiten Carbon Black Basisteilchen zu Hybrid - Carbon Black - Teilchen.

### Beschreibung der Zeichnungen

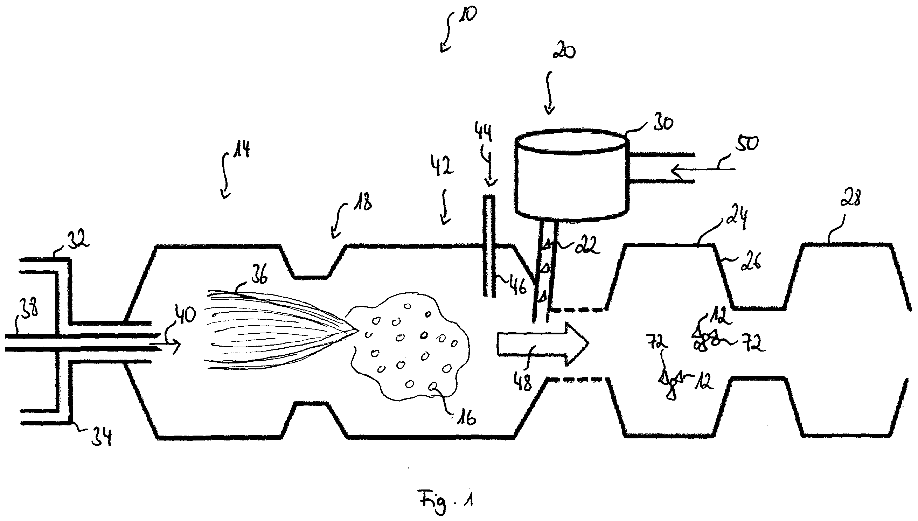

Fig. 1 zeigt eine Vorrichtung 10 zum Herstellen von Hybrid - Carbon Black - Teilchen 12. Die Vorrichtung 10 weist eine Herstelleinrichtung 14 zum Herstellen von ersten Carbon Black Basisteilchen 16 in Form einer Verbrennungskammer 18 auf. Weiter weist die Vorrichtung 10 einer Zuführeinrichtung 20 zum Zuführen von zweiten Carbon Black Basisteilchen 22 auf. Weiterhin ist eine Verdichtungseinrichtung 24 in Form einer Pelletierungsanlage 26 zum gemeinsamen Verdichten der ersten und zweiten Carbon Black Basisteilchen 16, 22 in der Vorrichtung 10 vorgesehen. Nach der Pelletierungsanlage 26 folgt eine Trocknungseinrichtung 28. In der Zuführeinrichtung 20 ist eine Mahleinrichtung 30 angeordnet, in der die zweiten. Carbon Black - Basisteilchen 22 zermahlen werden.

Der Verbrennungsofen 18 weist ein erstes Versorgungsrohr 32 auf, mit dem Gas dem Verbrennungsofen 18 zugeführt wird, sowie ein 2. Versorgungsrohr 34, mit dem Luft dem Verbrennungsofen 18 zugeführt wird. Über die Versorgungsrohre 32, 34 wird somit ein Gas - Luft - Strom 36 erzeugt, der, auf eine hohe Temperatur zwischen 1200 °C und 1800 °C gebracht, über ein drittes Versorgungsrohr 38 in den Verbrennungsofen 18 eingespeistes Mineralöl 40 verbrennt.

Durch Verbrennung des Mineralöls 40 in dem Verbrennungsofen 18 entsteht freier Kohlenstoff, der durch den Gas - Luft - Strom in eine Abkühleinrichtung 42 getragen wird, wo er mit Wasser 44, das über eine Düse 46 in die Abkühleinrichtung 42 eingedüst wird, rasch abgekühlt wird. Durch das rasche Abkühlen entstehen die ersten Carbon Black Basisteilchen 16, die, getragen durch den Gas - Luft - Strom 36, einen Teilchenstrom 48 bilden, der direkt in die Pelletierungsanlage 26 eintritt.

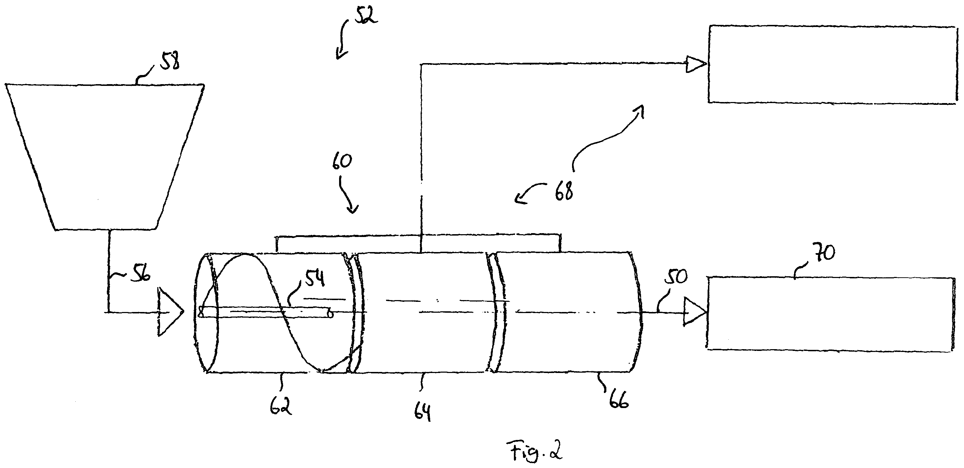

Fig. 2 zeigt die Herstellung eines Pyrolyseproduktes 50, das über die Zuführeinrichtung 20 in den Teilchenstrom 48 der ersten Carbon Black Basisteilchen 16 eingebracht wird.

In einem Pyrolyseofen 52 befindet sich eine Schnecke 54, die beispielsweise geschredderte Altreifen als Produktgranulat 56 durch den Pyrolyseofen 52 transportiert. Über einen Trichter 58 werden die geschredderten Altreifen in den Pyrolyseofen 52 eingeführt, ohne dass die Druckverhältnisse im Pyrolyseofen 52 - dort herrscht eine Unterdruckatmosphäre - beeinflusst werden.

Der Pyrolyseofen 52 weist drei Heizzonen 60 auf, in denen das Produktgranulat 56 bei unterschiedlichen Temperaturen beheizt wird. In einer ersten Heizzone 62 herrscht dabei eine Temperatur zwischen 100 °C und 200 °C. In einer zweiten Heizzone 64 herrscht eine Temperatur zwischen 200 °C und 350 °C. Und in einer dritten Heizzone 66 herrscht eine Temperatur zwischen 300 °C und 600 °C. In jeder der drei Heizzonen 62, 64, 66 werden Öle mit unterschiedlichem Massengewicht verflüchtigt und über eine Kondensierungsanlage 68 extrahiert.

Dieses verfeinerte Pyrolyseprodukt 50 wird dann In die Zuführeinrichtung 20 in Fig. 1 eingegebenen, und beim Transport in den Teilchenstrom 48 in der Mahleinrichtung 30 zu den zweiten Carbon Black Basisteilchen 22 zermahlen. Dabei wird das Pyrolyseprodukt 50 solange gemahlen, bis zweite Carbon Black Basisteilchen 22 mit einer Korngröße von zwischen 2 µm und 10 µm entstanden sind.

Die Zuführeinrichtung 20 mündet in die Abkühleinrichtung 42, so dass sich die dort entstehenden ersten Carbon Black Basisteilchen 16 homogen mit den zugeführten zweiten Carbon Black Basisteilchen 22 vermischen. Es ist jedoch auch möglich, die Zuführeinrichtung 20 vor der Düse 46 in den Verbrennungsofen 18 einmünden zu lassen.

In dem Teilchenstrom 48 befinden sich stromabwärts hinter der Zuführeinrichtung 20 die ersten und zweiten Carbon Black Basisteilchen 16, 22. Gemeinsam werden diese durch die in dem Teilchenstrom 48 vorhandene kinetische Energie in die Pelletierungsanlage 26 eingeblasen und dort zu Pellets 72 verdichtet. Es erfolgt ein Weitertransport in die Trocknungseinrichtung 28, wo Wasser 44, das zum Abkühlen und zum Pelletieren verwendet worden ist, aus den Pellets 72 entfernt wird.

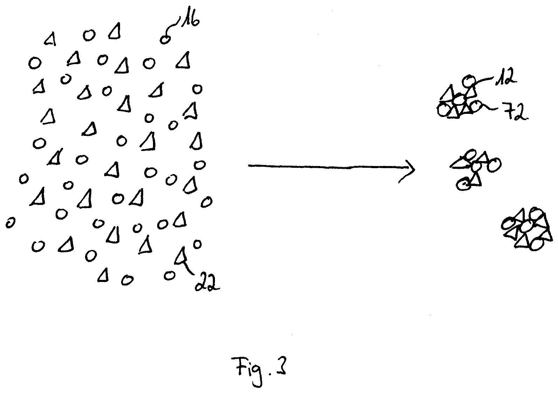

Der Prozess zur Herstellung der Hybrid - Carbon Black - Teilchen 12 ist in Fig. 3 nochmals anschaulich dargestellt. Ein Teilchenstrom 48, in dem homogen verteilt erste Carbon Black Basisteilchen 16 und zweite Carbon Black Basisteilchen 22 vorliegen, wird in der Pelletierungsanlage 26 zu Pellets 72 verdichtet, wobei jedes Pellet 72 sowohl erste Carbon Black Basisteilchen 16 als auch zweite Carbon Black Basisteilchen 22 aufweist. Somit sind Hybrid - Carbon Black - Teilchen 12 entstanden, die ein gewünschtes Mischungsverhältnis der ersten und zweiten Carbon Black Basisteilchen 16, 22 in jedem Hybrid - Carbon Black - Teilchen 12 aufweisen.

Bislang war mittels Pyrolyse gewonnenes Recycling Carbon Black qualitativ minderwertig und fand höchstens Einsatz als Füllstoff im Straßenbau etc.

Ein aus der WO 2011/035812 A1 bekannter Pyrolyse- Prozess für Altreifengranulat ermöglicht die industrielle Herstellung eines Recycling Carbon Blacks, das aufgrund seiner hohen Qualität wieder Einsatz in der Gummi- und Reifenherstellung finden kann.

Recycling Carbon Black hat aufgrund der Prozessführung in der Pyrolyse unterschiedliche Korngrößen. Um eine definierte maximale Partikelgröße zu erhalten und damit eine gute Verteilung von Recycling Carbon Black in einer Gummimischung zu erhalten, kann Recycling Carbon Black gemahlen werden. Gemahlenes Recycling Carbon Black hat jedoch genau wie Standard Carbon Black eine sehr geringe Dichte und ein sehr großes Volumen. Produkte mit sehr geringer Dichte können schlecht gelagert, gefördert oder transportiert werden. Daher wird Standard Carbon Black für ein besseres Handling pelletiert. Auch gemahlenes Recycling Carbon Black kann genauso wie Standard Carbon Black pelletiert werden und ist damit gut lager-, förder- und transportfähig.

Aufgrund der gerade in den letzten 5 bis10 Jahren immer differenzierter werdenden Gummimischungen und Beimischungen von Silikaten entstehen Pyrolyse Endprodukte, die unterschiedliche Zusammensetzungen und vor allem unterschiedliche Silikat-Gehalte aufweisen. Für die industrielle Produktion von Reifen ist jedoch eine weitestgehend gleichbleibende Zusammensetzung vorteilhaft. Ein Ausgleich der chemischen Zusammensetzung und damit gleichbleibendes chemisches Verhalten in der Compoundierung von Gummimischungen lässt sich beispielsweise mittels Blenden (Mischen) von Recycling Carbon Black mit Standard Carbon Black erreichen.

Eine einfache Vermischung verschiedener Pellets vor einem Transport führt zu einem unerwünschten Aufplatzen der Pellets.

Die Erfindung beinhaltet jedoch ein Verfahren und eine Vorrichtung zur Vermischung von Recycling Carbon Black mit Standard Carbon Black vor dem Transport.

Da gemahlenes Recycling Carbon Black bei längerer Lagerung zur Agglomeration neigt, kann es mit der erfindungsgemäßen Vorrichtung direkt vor der Pelletierung in den Standardprozess zugeführt werden, um so gemeinsam mit Standard Carbon Black pelletiert zu werden.

Die für die Herstellung von Standard Carbon Black zumeist eingesetzte Trocknungs-Vorrichtung ist im industriellen Betrieb von der Größe auf den Durchsatz des Furnace Ofens eingerichtet und kann nicht mit einem geringeren Durchsatz betrieben werden.

Die Lösung für dieses Problem ist die Misch-Vorrichtung mit einer Mühle zum Mahlen von Recycling Carbon Black, die sich vorzugsweise nach dem Quenching am Ausgang der Furnace Brennkammer vor der Pelletierung oder an der Überleitung zur Pelletierungs-Vorrichtung befindet und genau dosiert die Menge an Recycling Carbon Black zuführt, um die der Furnace Prozess in seiner Leistung gemindert wurde. Alternativ kann die Zuführung von Recycling Carbon Black auch neben dem Öl zu Beginn der Furnace Brennkammer eingeblasen und mit durch den Furnace Prozess geschleust werden. Hierdurch wird das gemahlene Recycling Carbon Black gegebenenfalls zusätzlich veredelt.

**Bezugszeichenliste**

| | | | |
|---|---|---|---|
| 10 | Vorrichtung | 62 | erste Heizzone |
| 12 | Hybrid - Carbon Black - Teilchen | 64 | zweite Heizzone |
| 14 | Herstelleinrichtung | 66 | dritte Heizzone |
| 16 | erstes Carbon Black Basisteilchen | 68 | Kondensierungsanlage |
| 18 | Verbrennungsofen | 70 | Verfeinerungsanlage |
| 20 | Zuführeinrichtung | 72 | Pellet |
| 22 | zweites Carbon Black Basisteilchen | | |
| 24 | Verdichtungseinrichtung | | |
| 26 | Pelletierungsanlage | | |
| 28 | Trocknungseinrichtung | | |
| 30 | Mahleinrichtung | | |
| 32 | erstes Versorgungsrohr | | |
| 34 | zweites Versorgungsrohr | | |
| 36 | Gas - Luft - Strom | | |
| 38 | drittes Versorgungsrohr | | |
| 40 | Mineralöl | | |
| 42 | Abkühleinrichtung | | |
| 44 | Wasser | | |
| 46 | Düse | | |
| 48 | Teilchenstrom | | |
| 50 | Pyrolyseprodukt | | |
| 52 | Pyrolyseofen | | |
| 54 | Schnecke | | |
| 56 | Produktgranulat | | |
| 58 | Trichter | | |
| 60 | Heizzonen | | |

## Patentansprüche

1. Verfahren zur Herstellung von Hybrid - Carbon Black - Teilchen (12) mit den Schritten:
a) Bereitstellung von ersten Carbon Black Basisteilchen (16); **gekennzeichnet durch**
b) Bereitstellung von zweiten Carbon Black Basisteilchen (22);
c) Mahlen der zweiten Carbon Black Basisteilchen (22);
d) Einmischen der zweiten Carbon Black Basisteilchen (22) in einen Teilchenstrom (48) der ersten Carbon Black Basisteilchen (16); und
d) Pelletierung der ersten und zweiten Carbon Black Basisteilchen (16, 22) zu Hybrid - Carbon Black - Teilchen (12).

2. Verfahren nach Anspruch 1,
**dadurch gekennzeichnet, dass** in Schritt a) die folgenden Schritte durchgeführt werden:
a1) Verbrennung eines Kohlenstoffbasismaterials in einem Verbrennungsofen (18), vorzugsweise in einer Strömung eines Gas-Luft-Gemischs (36) bei Verbrennungstemperaturen zwischen 1200 °C und 1800 °C;
a2) schnelles Abkühlen einer in Schritt a1) entstehenden Verbrennungsprodukt-Strömung, sodass sich die ersten Carbon Black Basisteilchen (16) bilden.

3. Verfahren nach Anspruch 2,
**dadurch gekennzeichnet, dass** die ersten Carbon Black Basisteilchen (16) eine Teilchengröße von etwa 2 µm bis 10 µm, vorzugsweise von etwa 3 µm bis 7 µm, aufweisen.

4. Verfahren nach einem der Ansprüche 2 oder 3,
**dadurch gekennzeichnet, dass** das schnelle Abkühlen durch Eindüsen von Wasser (44) in die Verbrennungsprodukt-Strömung erfolgt.

5. Verfahren nach einem der Ansprüche 2 bis 4,
**dadurch gekennzeichnet, dass** als Kohlenstoffbasismaterial Mineralöl (40), insbesondere aromatisches Öl, vorzugsweise carbo- oder petrochemisches Öl, verbrannt wird.

6. Verfahren nach einem der Ansprüche 1 bis 5,
**dadurch gekennzeichnet, dass** in Schritt b) ein Produktgranulat (56) auf der Grundlage von Kohlenstoff in mehreren Heizzonen (60, 62, 64, 66) mit unterschiedlichen Temperaturen in einer Unterdruckatmosphäre zu einem Pyrolyseprodukt (50) pyrolysiert wird, wobei das Produktgranulat (56) in jeder Heizzone (60, 62, 64, 66) 2 bis 4 Stunden verweilt.

7. Verfahren nach Anspruch 6,
**dadurch gekennzeichnet, dass** als Produktgranulat (56) zerkleinerte Reifenabfälle verwendet wird.

8. Verfahren nach einem der Ansprüche1 bis 7,
**dadurch gekennzeichnet, dass** die zweiten Carbon Black Basisteilchen (22) zu einer Teilchengröße von etwa 2 µm bis 10 µm, vorzugsweise 3 µm bis 7 µm gemahlen werden.

9. Verfahren nach einem der Ansprüche 1 bis 8,
**dadurch gekennzeichnet, dass** in Schritt d) der Teilchenstrom (48) aus den ersten und zweiten Carbon Black Basisteilchen (16, 22) zum Pelletieren der ersten und zweiten Carbon Black Basisteilchen (16, 22) zu Hybrid - Carbon Black - Teilchen (12) mit Wasser (44) und/oder mit weiteren Zusatzstoffen vermischt wird.

10. Verfahren nach einem der Ansprüche 1 bis 9,
**dadurch gekennzeichnet, dass** der Teilchenstrom (48) in Schritt d) auf wenigstens 1/2 seines ursprünglichen Volumens verdichtet wird.

11. Verfahren nach einem der Ansprüche 1 bis 10,
**dadurch gekennzeichnet, dass** die Hybrid - Carbon Black - Teilchen (12) nach Schritt d) getrocknet werden.

12. Hybrid - Carbon Black - Teilchen (12) aus ersten Carbon Black Basisteilchen (16) und zweiten Carbon Black Basisteilchen (22), hergestellt mit einem Verfahren nach einem der Ansprüche 1 bis 11.

13. Vorrichtung zur Herstellung von Hybrid - Carbon Black - Teilchen (12), aufweisend eine Herstelleinrichtung (14) zum Erzeugen eines Teilchenstroms (48) aus ersten Carbon Black Basisteilchen (16), **gekennzeichnet durch** eine Zuführeinrichtung (20) zum Zuführen von zweiten Carbon Black Basisteilchen (22) zu dem Teilchenstrom (48) und eine Verdichtungseinrichtung (24) zum Pelletieren der ersten und zweiten Carbon Black Basisteilchen (16, 22) zu Hybrid -Carbon Black - Teilchen (12), wobei die Zuführeinrichtung (20) eine Mahleinrichtung (30) zum Erzeugen der zweiten Carbon Black Basisteilchen (22) durch Zermahlen eines Pyrolyseprodukts (50) auf Grundlage von Kohlenstoff aufweist.

14. Vorrichtung nach Anspruch 13,
**dadurch gekennzeichnet, dass** eine Trocknungseinrichtung (28) zum Trocknen der Hybrid - Carbon Black - Teilchen (12) vorgesehen ist.

## Claims

1. Process for the production of hybrid carbon black particles (12) comprising the steps:
a) providing first carbon black base particles (16);
**characterised by**
b) providing second carbon black base particles (22);
c) milling said second carbon black base particles (22);
d) mixing said second carbon black base particles (22) into a particle stream (48) of said first carbon black base particles (16); and
d) pelletising said first and second carbon black base particles (16, 22) into hybrid carbon black particles (12).

2. Process according to claim 1,
**characterised in that** in step a) the following substeps are carried out:
a1) combustion of a carbon base material in a furnace (18), preferably in a stream of a gas-air mixture (36), at combustion temperatures between 1200°C and 1800°C;
a2) rapidly cooling a combustion product stream formed in step a1) such that the first carbon black base particles (16) are formed.

3. Process according to claim 2,
**characterised in that** the first carbon black base particles (16) have a particle size of about 2 µm to 10 µm, preferably about 3 µm to 7 µm.

4. Process according to one of claims 2 or 3,
**characterised in that** the rapid cooling is achieved by injecting water (44) into the combustion product stream.

5. Process according to one of claims 2 to 4,
**characterised in that** mineral oil (40), in particular aromatic oil, preferably carbochemical or petrochemical oil, is combusted as carbon base material.

6. Process according to one of claims 1 to 5,
**characterised in that** in step b), a product granulate (56) based on carbon is pyrolysed in a plurality of heating zones (60, 62, 64, 66) at different temperatures in a negative pressure atmosphere to form a pyrolysis product (50), wherein the product granulate (56) remains in each heating zone (60, 62, 64, 66) for 2 to 4 hours.

7. Process according to claim 6,
**characterised in that** shredded tyre waste is used as product granulate (56).

8. Process according to one of claims 1 to 7,
**characterised in that** the second carbon black base particles (22) are milled to a particle size of about 2 µm to 10 µm, preferably 3 µm to 7 µm.

9. Process according to one of claims 1 to 8,
**characterised in that** in step d) the particle stream (48) of the first and second carbon black base particles (16, 22) for pelletising the first and second carbon black base particles (16, 22) is mixed to hybrid carbon black particles (12) with water (44) and/or with further additives.

10. Process according to one of claims 1 to 9,
**characterised in that** in step d) the particle stream (48) is compressed to at least ½ of its original volume.

11. Process according to one of claims 1 to 10,
**characterised in that** after step d) hybrid carbon black particles (12) are dried.

12. Hybrid carbon black particles (12) of first carbon black base particles (16) and second carbon black base particles (22) produced by a process according to one of claims 1 to 11.

13. Device for producing hybrid carbon black particles (12), comprising manufacturing means (14) for generating a particle stream (48) of first carbon black base particles (16), **characterized by** feeding means (20) for feeding second carbon black base particles (22) to said particle stream (48) and compressing means (24) for pelletising said first and second carbon black base particles (16, 22) to hybrid carbon black particles (12), the feeding means (20) comprising milling means (30) for producing the second carbon black base particles (22) by milling a pyrolysis product (50) based on carbon.

14. Device according to claim 13,
**characterised in that** a drying means (28) for drying the hybrid carbon black particles (12) is provided.

## Revendications

1. Procédé pour préparer des particules hybrides de noir de carbone (12) comprenant les étapes consistant à :
a) mettre à disposition des premières particules de base de noir de carbone (16) ;
**caractérisé par** les étapes consistant à
b) mettre à disposition des secondes particules de base de noir de carbone (22) ;
c) broyer les secondes particules de base de noir de carbone (22) ;
d) mélanger les secondes particules de base de noir de carbone (22) dans un courant de particules (48) des premières particules de base de noir de carbone (16) ; et
d) préparer des pastilles avec les premières et les secondes particules de base de noir de carbone (16, 22) pour donner des particules hybrides de noir de carbone (12).

2. Procédé selon la revendication 1,
**caractérisé en ce que** dans l'étape a) on exécute les opérations suivantes :
a1) combustion d'un matériau à base de carbone dans un four de combustion (18), de préférence dans un flux d'un mélange gaz/air (36) à des températures de combustion entre 1200° C est 1800° C ;
a2) refroidissement rapide d'un flux de produit de combustion apparaissant dans l'opération a1), de sorte que les premières particules de base de noir de carbone (16) se forment.

3. Procédé selon la revendication 2,
**caractérisé en ce que** les premières particules de base de noir de carbone (16) présentent une taille de particules d'environ 2 µm à 10 µm, de préférence d'environ 3 µm à 7 µm.

4. Procédé selon l'une des revendications 2 ou 3,
**caractérisé en ce que** le refroidissement rapide a lieu par injection d'eau (44) dans le flux de produit de combustion.

5. Procédé selon l'une des revendications 2 à 4,
**caractérisé en ce que** l'on fait brûler, à titre de matériau de base de carbone, de l'huile minérale (40), en particulier de l'huile aromatique, de préférence de l'huile carbochimique ou pétrochimique.

6. Procédé selon l'une des revendications 1 à 5,
**caractérisé en ce que** dans l'étape b) un produit sous forme de granulés (56) à base de carbone est pyrolysé dans plusieurs zones de chauffe (60, 62, 64, 66) à différentes températures dans une atmosphère en dépression pour donner un produit de pyrolyse (50), et le produit sous forme de granulés (56) séjourne de 2 à 4 heures dans chaque zone de chauffe (60, 62, 64, 66).

7. Procédé selon la revendication 6,
**caractérisé en ce que** l'on utilise à titre de produit sous forme de granulés (56) des déchets de pneumatiques broyés.

8. Procédé selon l'une des revendications 1 à 7,
**caractérisé en ce que** les secondes particules de base de noir de carbone (22) sont broyées jusqu'à une taille de particules d'environ 2 µm à 10 µm, de préférence 3 µm à 7 µm.

9. Procédé selon l'une des revendications 1 à 8,
**caractérisé en ce que**, pour former les pastilles des premières et des secondes particules de base de noir de carbone (16, 22) pour donner les particules hybrides de noir de carbone (12), dans l'étape d) le flux de particules (48) formé des premières et des secondes particules de base de noir de carbone (16, 22) est mélangé avec de l'eau (44) et/ou avec d'autres produits additifs.

10. Procédé selon l'une des revendications 1 à 9,
**caractérisé en ce que** le flux de particules (48) est comprimé dans l'étape d) au moins à 1/2 de son volume d'origine.

11. Procédé selon l'une des revendications 1 à 10,
**caractérisé en ce que**, après l'étape d), les particules hybrides de noir de carbone (12) sont séchées.

12. Particules hybrides de noir de carbone (12) formées à partir de premières particules de base de noir de carbone (16) et de secondes particules de base de noir de carbone (22), préparées avec un procédé selon l'une des revendications 1 à 11.

13. Dispositif pour la préparation de particules hybrides de noir de carbone (12), comprenant un moyen de préparation (14) pour engendrer un flux de particules (48) à partir de premières particules de base de noir de carbone (16), **caractérisé par** un moyen d'admission (20) pour admettre des secondes particules de base de noir de carbone (22) dans le flux de particules (48), et un moyen de compression (24) pour la réalisation de pastilles avec les premières et les secondes particules de base de noir de carbone (16, 22) pour donner des particules hybrides de noir de carbone (12), dans lequel le moyen d'admission (20) comprend un dispositif de broyage (30) pour engendrer les secondes particules de base de noir de carbone (22) par broyage d'un produit de pyrolyse (50) à base de carbone.

14. Dispositif selon la revendication 13,
**caractérisé en ce qu'**il est prévu un dispositif de séchage (28) pour sécher les particules hybrides de noir de carbone (12).
